# EUROPÄISCHE PATENTSCHRIFT

(11) **EP 3 775 511 B1**
(45) Veröffentlichungstag und Bekanntmachung des Hinweises auf die Patenterteilung: **02.03.2022**
(21) Anmeldenummer: 19715848.8
(22) Anmeldetag: 26.03.2019
(51) Int. Cl.: F01N 3/20

(54) **VORRICHTUNG ZUR NACHBEHANDLUNG VON ABGASEN**
APPARATUS FOR THE AFTERTREATMENT OF EXHAUST GASES
DISPOSITIF DE POST-TRAITEMENT DE GAZ D'ÉCHAPPEMENT

(30) Priorität: 29.03.2018 DE 102018204903
(43) Veröffentlichungstag der Anmeldung: 17.02.2021
(73) Patentinhaber: Vitesco Technologies GmbH, 93055 Regensburg (DE)
(72) Erfinder: HOLZ, Oswald, 65824 Schwalbach a. Ts. (DE); ILLHARDT, Peter, 65824 Schwalbach a. Ts. (DE)
(74) Vertreter: Vitesco Technologies
(86) Internationale Anmeldenummer: PCT/EP2019/057525
(87) Internationale Veröffentlichungsnummer: WO 2019/185595

(56) Entgegenhaltungen:
- WO-A1-2013/104633
- DE-A1- 4 222 162
- DE-A1-102012 213 187
- DE-U1- 9 202 798
- JP-A- H0 385 315
- US-A1- 2012 301 376

## Beschreibung

### Technisches Gebiet

Die Erfindung betrifft eine Vorrichtung zur Nachbehandlung von Abgasen eines Verbrennungsmotors, mit einem von dem Abgas von einem Eintritt hin zu einem Austritt durchströmbaren Gehäuse, mit einer in radialer Richtung räumlich begrenzten und in axialer Richtung durchströmbaren Strömungsstrecke, die innerhalb des Gehäuses angeordnet ist, mit zumindest einem in der Strömungsstrecke angeordneten Katalysator zur katalytischen Umwandlung des Abgases, und mit zumindest einem in der Strömungsstrecke angeordneten vom Abgas durchströmbaren Heizelement zur elektrischen Beheizung des Abgases.

### Stand der Technik

Zur schnelleren Erwärmung von Abgasmassenströmen werden elektrisch beheizbare Katalysatoren eingesetzt. Zusätzlich zu der Wärmemenge des Abgases an sich wird dem Abgas so eine Wärmemenge durch die elektrische Aufheizung zugeführt. Dies hilft dabei das Temperaturniveau des Abgasmassenstroms schneller auf ein Niveau zu heben, welches eine ausreichende Umwandlung des Abgases in den Abgaskatalysatoren zulässt. Die Umwandung des Abgases beginnt in der Regel ab einer gewissen Mindesttemperatur am Katalysator, welche erreicht werden muss, damit die chemischen Umwandlungsreaktionen beginnen können. Eine erhöhte Temperatur des Abgasmassenstroms führt durch den Wärmetransport vom Abgas auf die Wabenkörper der Katalysatoren auch zu einer Erhöhung der Temperatur am Katalysator. Die mögliche Erwärmung des Abgasmassenstroms hängt dabei einerseits von der Menge des pro Zeiteinheit durch den elektrisch beheizbaren Katalysator strömenden Abgases ab und andererseits von der eingesetzten elektrischen Energie zur Beheizung.

Die Druckschrift DE 10 2012 213187 A1 offenbart ein Verfahren zum Behandeln von Emissionen von einer Brennkraftmaschine eines Hybridfahrzeuges. Das Verfahren umfasst ein Lenken einer Luftströmung, die durch die Brennkraftmaschine erzeugt wird, wenn die Brennkraftmaschine dreht, jedoch nicht mit Kraftstoff beliefert wird. Die zur Ausführung des Verfahrens genutzte Vorrichtung weist einen elektrisch beheizten Katalysator auf, welcher genutzt wird, um eine mit Kohlenwasserstoffen gesättigte Luftströmung zu behandeln und die Kohlenwasserstoffe zu entfernen. Die Vorrichtung weist weiterhin einen Bypasspfad auf, um die Luftströmung an dem elektrisch beheizbaren Katalysator vorbeizuführen.

Nachteilig an den im Stand der Technik bekannten Systemen zur elektrischen Beheizung des Abgasmassenstroms eines Verbrennungsmotors ist hierbei insbesondere, dass der durch den elektrisch beheizbaren Katalysator strömende Abgasstrom nur schlecht oder gar nicht reguliert werden kann. Der durch den elektrisch beheizbaren Katalysator strömende Massenstrom ist somit einzig durch die jeweilige Betriebssituation des Verbrennungsmotors bestimmt, weswegen es insbesondere bei hohen Abgasmassenströmen dazu kommen kann, dass eine nicht optimale Beheizung des Abgasmassenstroms erfolgt, wodurch es zu einer zeitlichen Verzögerung bis zum Erreichen der ausreichenden Umwandlung des Abgases in den Katalysatoren der Abgasnachbehandlungseinheit kommen kann.

### Darstellung der Erfindung, Aufgabe, Lösung, Vorteile

Daher ist es die Aufgabe der vorliegenden Erfindung eine Vorrichtung zur Abgasnachbehandlung zu schaffen, welche es erlaubt eine verbesserte Beheizung des Abgasmassenstroms unter Verwendung eines elektrisch beheizbaren Katalysators zu erreichen und so ein schnelleres Erreichen der Mindesttemperatur des Abgasmassenstroms für eine ausreichende Umwandlung des Abgases an den jeweiligen Katalysatoren zu sichern.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Nachbehandlung von Abgasen eines Verbrennungsmotors, mit einem von dem Abgas von einem Eintritt hin zu einem Austritt durchströmbaren Gehäuse, mit einer in radialer Richtung räumlich begrenzten und in axialer Richtung durchströmbaren Strömungsstrecke, die innerhalb des Gehäuses angeordnet ist, mit zumindest einem in der Strömungsstrecke angeordneten Katalysator zur katalytischen Umwandlung des Abgases, und mit zumindest einem in der Strömungsstrecke angeordneten vom Abgas durchströmbaren Heizelement zur elektrische Beheizung des Abgases, wobei zwischen der Strömungsstrecke und der Innenwandung des Gehäuses ein durchströmbarer Ringspalt ausgebildet ist, wobei die Verteilung des Abgasmassenstroms auf die Strömungsstrecke und den Ringspalt durch ein Kontrollelement beeinflussbar ist.

Ein durchströmbares Gehäuse ist bevorzugt durch ein Rohr gebildet, das in Fluidkommunikation mit der Abgasleitung des Verbrennungsmotors steht. Abgas kann somit direkt in die Vorrichtung einströmen und diese durchströmen. Innerhalb des Gehäuses ist eine Strömungsstrecke ausgebildet, die beispielsweise ebenfalls durch ein Rohr gebildet ist. Das Rohr ist in einer radialen Richtung durch seine Wandung begrenzt, wodurch innerhalb des Gehäuses praktisch zwei Strömungswege ausgebildet werden. Bevorzugt ist die im Gehäuse ausgebildete Strömungsstrecke konzentrisch innerhalb des Gehäuses angeordnet, es ist daher zwischen der Außenwandung der Strömungstrecke und der Innenwandung des Gehäuses ein Ringspalt ausgebildet. Die Strömungsstrecke kann über Stützelemente gegenüber dem Gehäuse fixiert werden.

In das Gehäuse einströmendes Abgas kann somit sowohl durch den ausgebildeten Ringspalt strömen als auch durch die Strömungsstrecke. Sofern kein Kontrollelement vorgesehen wäre, würde die Verteilung des Abgasmassenstroms auf den Ringspalt und die Strömungsstrecke im Wesentlichen durch die Querschnittsflächen der beiden Strömungswege beeinflusst werden.

Erfindungsgemäß ist zumindest ein Kontrollelement vorgesehen, welches aktiv beeinflusst werden kann, um die Verteilung des Abgasmassenstroms auf den Ringspalt und die Strömungsstrecke zu beeinflussen. Das Kontrollelement kann dabei auf unterschiedliche Arten ausgebildet sein. In den nachfolgenden Beschreibungen sind besonders bevorzugte Ausgestaltungen des Kontrollelements beschrieben.

Besonders vorteilhaft ist es, wenn das Kontrollelement durch eine drehbar gelagerte Lochblende gebildet ist, wobei durch Verdrehung der Lochblende der durchströmbare Querschnitt des Ringspalts vergrößerbar oder verkleinerbar ist.

Eine Lochblende kann beispielsweise durch einen Ring gebildet sein, der in dem Ringspalt angeordnet ist. Der Ring überdeckt den Strömungsquerschnitt des Ringspaltes und blockiert somit in einer möglichen Position den Abgasstrom durch den Ringspalt. In diesem Fall strömt das gesamte durch die Vorrichtung strömende Abgas durch die Strömungsstrecke, die innerhalb des Gehäuses angeordnet ist und von dem Ringspalt umgeben ist.

Die Lochblende weist entsprechend ihrer Funktion Löcher auf, die beispielsweise in Umfangsrichtung zueinander beabstandet angeordnet sind. Durch das Verdrehen der Lochblende relativ zum Gehäuse beziehungsweise der Strömungsstrecke kann ein Strömungsquerschnitt des Ringspalts freigegeben werden, so dass der Anteil des Abgasmassenstroms, der durch den Ringspalt strömt, steigt.

Auch ist es vorteilhaft, wenn die Lochblende einen feststehenden Abschnitt und einen gegenüber diesem feststehenden Abschnitt drehbar gelagerten Abschnitt aufweist, wobei beide Abschnitte in Umfangsrichtung zueinander beabstandete Öffnungen aufweisen.

Durch einen solchen Aufbau kann durch das Verdrehen des drehbar gelagerten Abschnitts gegenüber dem feststehenden Abschnitt eine Mehrzahl von Öffnungen freigegeben werden beziehungsweise können freigegebene Öffnungen durch das Verdrehen wider verschlossen werden. Insbesondere durch das Verdrehen der Lochblende derart, dass die Öffnungen im verdrehbaren Teil mit den Öffnungen im feststehenden Teil in Deckung liegen kann ein besonders großer Strömungsquerschnitt freigegeben werden.

Je nach Art, Anzahl und Größe der Öffnungen in der Lochblende, kann der maximal freigebbare Strömungsquerschnitt definiert werden.

Ein bevorzugtes Ausführungsbeispiel ist dadurch gekennzeichnet, dass das Kontrollelement durch eine in axialer Richtung des Gehäuses verschiebbare Ringblende gebildet ist. Ein axial verschiebbarer Ring ist besonders geeignet den durchströmbaren Strömungsquerschnitt zu beeinflussen, wenn entweder die Innenwandung des Gehäuses und/oder die Außenwandung des Gehäuses sich konisch verjüngen beziehungsweise sich konisch erweitern.

Durch das Verschieben der Ringblende, welche eine unveränderliche definierte Form aufweist, kann so der durchströmbare Strömungsquerschnitt des Ringspalts vergrößert oder verkleinert werden.

Auch ist es zu bevorzugen, wenn die Ringblende innerhalb des Ringspaltes zwischen der Strömungsstrecke und dem Gehäuse angeordnet ist.

Darüber hinaus ist es vorteilhaft, wenn die Ringblende relativ zum Gehäuse und/oder der Strömungsstrecke verschiebbar ist, wobei die Ringblende einen definierten Öffnungsquerschnitt aufweist. Durch das Verschieben der Ringblende kann aktiv der durchströmbare Strömungsquerschnitt des Ringspalts beeinflusst werden. Es besteht somit die Möglichkeit, abhängig von den gerade vorherrschenden Betriebsbedingungen, eine möglichst optimale Verteilung des Abgasstroms auf den Ringspalt und die Strömungsstrecke zu erzeugen.

Weiterhin ist es vorteilhaft, wenn die Ringblende Leitbleche aufweist, wobei der durch den Ringspalt strömende Abgasmassenstrom durch die Leitbleche ablenkbar ist. Leitbleche sind vorteilhaft, da der durch den Ringspalt strömende Abgasstrom gezielt beeinflusst werden kann. Es kann so beispielsweise ein Wirbel erzeugt werden, wodurch eine bessere Vermischung der beiden Abgasströme nach dem Durchströmen der Strömungsstrecke und dem Ringspalt erreicht werden kann. Auch kann die Strömung im Ringspalt turbulent werden durch die Leitbleche, wodurch der Wärmeübergang verbessert wird und eine Homogenisierung der Temperaturverteilung beziehungsweise der Konzentrationen der verschiedenen Abgasbestandteile erreicht werden kann.

Auch ist es zweckmäßig, wenn die die Strömungsstrecke in radialer Richtung begrenzende Struktur als Kontrollelement drehbar gelagerte Klappen aufweist. Drehbare Klappen können gezielt beeinflusst werden, um Öffnungen freizugeben oder diese zu verschließen. Abhängig von der aktuell gewünschten Verteilung des Abgasstroms auf die Strömungsstrecke und den Ringspalt können die Klappen aktiv verstellt werden, wodurch das Überströmen zwischen der Strömungsstrecke und dem Ringspalt geregelt wird.

Darüber hinaus ist es vorteilhaft, wenn die drehbar gelagerten Klappen um in axialer Richtung ausgerichtete Achsen drehbar gelagert sind. In axiale Richtung bedeutet parallel zur Hauptdurchströmungsrichtung der Vorrichtung. Durch um axiale Drehachsen drehbar gelagerte Klappen kann somit eine Öffnung in radialer Richtung freigegeben werden, so dass das Abgas aus der Strömungsstrecke in radiale Richtung nach außen in den Ringspalt strömen kann. In einer vorteilhaften Ausführung der Vorrichtung strömt das Abgas in die konzentrisch im Gehäuse angeordnete Strömungsstrecke ein und von dort bei geschlossenen Klappen vollständig vorbei an dem Heizelement hinein in die in der Strömungsstrecke oder nach der Strömungsstrecke angeordneten Katalysatoren. Ein Überströmen in den die Strömungsstrecke umgebenden Ringspalt ist in dieser Stellung der Klappen unterbunden. Der Ringspalt wirkt in dieser Klappenstellung als thermisch isolierendes Luftpolster, welches einen Wärmeverlust von der Strömungsstrecke hin zur Umgebung des Gehäuses reduziert. Der Ringspalt wird in dieser Klappenstellung nicht aktiv mit Abgas durchströmt.

Je weiter die Klappen geöffnet werden, umso größer wird der Anteil des Abgasmassenstroms, der aus der Strömungsstrecke in den Ringspalt überströmt.

Weiterhin ist es zweckmäßig, wenn durch die Klappen Öffnungen freigebbar sind, welche ein zumindest teilweises Überströmen des Abgasmassenstroms aus der Strömungsstrecke in den Ringspalt erlauben. Dies ist vorteilhaft, um eine Aufteilung des Abgasmassenstroms auf die Strömungsstrecke und den Ringspalt zu erreichen.

Außerdem ist es zweckmäßig, wenn die Strömungsstrecke derart im Gehäuse angeordnet ist, dass der Ringspalt nur durch die von den Klappen freigebbaren Öffnungen von dem Abgasstrom durchströmbar ist. Dies ist vorteilhaft, um die Verteilung des Abgasstroms von der Strömungsstrecke auf den Ringspalt besser beeinflussen zu können.

Auch ist es zu bevorzugen, wenn im Ringspalt als Kontrollelement um radial ausgerichtete Achsen drehbar gelagerte Drallklappen angeordnet sind. Darüber hinaus ist es vorteilhaft, wenn durch das Verdrehen der Drallklappen ein Strömungsquerschnitt des Ringspalts freigebbar ist.

Drallklappen im Ringspalt können durch das Verdrehen der Klappen um ihre jeweiligen Drehachsen den durchströmbaren Querschnitt des Ringspalts vergrößern oder verkleinern und ihn abhängig von dem Aufbau der Drallklappen auch vollständig verschließen.

Weiterhin ist es vorteilhaft, wenn die Drallklappen in Umfangsrichtung zueinander beabstandet im Ringspalt angeordnet sind. Durch die Anzahl der Drallklappen, deren Größe und Beabstandung zueinander kann ebenfalls auf den freigebbaren Strömungsquerschnitt Einfluss genommen werden.

Auch ist es zweckmäßig, wenn die Strömungsstrecke durch ein Mantelrohr gebildet ist, welches innerhalb des Gehäuses angeordnet ist.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht durch eine konventionelle Vorrichtung zur Abgasnachbehandlung,
- Fig. 2: eine Schnittansicht durch eine erfindungsgemäße Vorrichtung zur Abgasnachbehandlung, wobei in dem Gehäuse eine Strömungsstrecke innerhalb eines Mantelrohres ausgebildet ist,
- Fig. 3: eine perspektivische Ansicht eines Kontrollelementes, welches in Form einer drehbaren Lochblende ausgebildet ist,
- Fig. 4: eine Schnittansicht durch eine Vorrichtung zur Abgasnachbehandlung, wobei das Kontrollelement durch eine axial verschiebbare Ringblende gebildet ist,
- Fig. 5: eine Schnittansicht durch eine alternative Ausgestaltung einer Vorrichtung zur Abgasnachbehandlung, wobei das Kontrollelement durch eine axial verschiebbare Ringblende gebildet ist,
- Fig. 6: eine Schnittansicht durch eine Vorrichtung zur Abgasnachbehandlung, wobei das Mantelrohr eine Mehrzahl von drehbaren Klappen aufweist, die ein Überströmen aus der Strömungsstrecke in den Ringspalt ermöglichen, und
- Fig. 7: eine perspektivische Ansicht einer Vorrichtung zur Abgasnachbehandlung, wobei drehbare Klappen im Bereich des Ringspaltes angeordnet sind, um den durchströmbaren Strömungsquerschnitt des Ringspaltes zu beeinflussen.

### Bevorzugte Ausführung der Erfindung

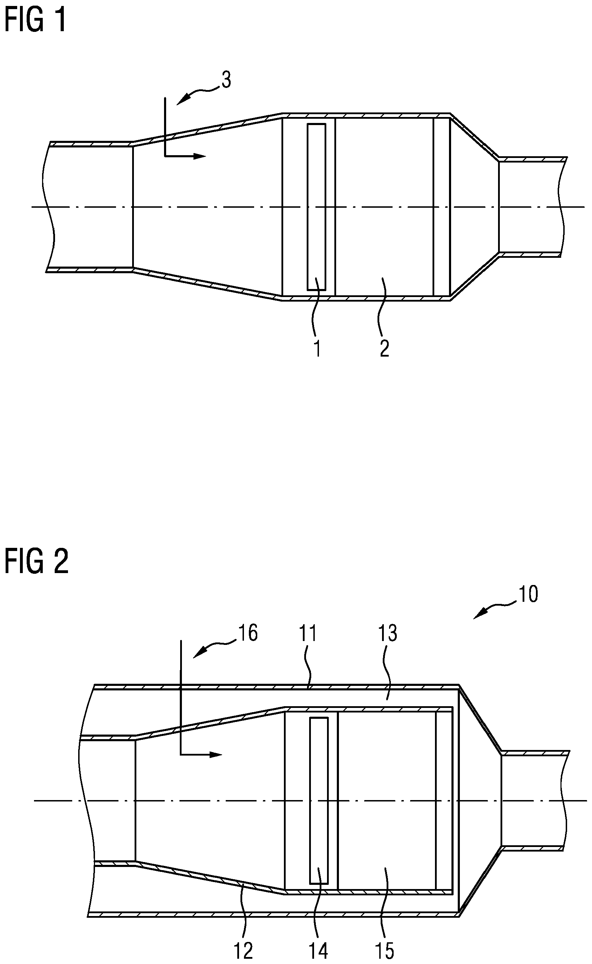

Die Figur 1 zeigt eine Schnittansicht durch eine Vorrichtung zur Abgasnachbehandlung. Sie ist gebildet aus einem Gehäuse mit Bereichen unterschiedlichen Durchmessers. Innerhalb des Gehäuses ist eine Vorrichtung 1 zur Erwärmung des Abgasstroms angeordnet und stromabwärts ein Katalysator 2, der zur Nachbehandlung von Abgasen dient. Zusätzlich kann die Vorrichtung Mittel zur Zugabe von Betriebsstoffen 3 vorweisen, um beispielsweise eine wässrige Harnstofflösung oder Kraftstoff in die Vorrichtung einzubringen.

Die in Figur 1 gezeigte Vorrichtung ist insbesondere dadurch gekennzeichnet, dass der gesamte Abgasstrom, der die Vorrichtung von links nach rechts durchströmt, vollständig durch das Heizelement 1 und den nachgeschalteten Katalysator 2 strömt. Sofern der Abgasmassenstrom also nicht die erforderliche Temperatur aufweist, um den Katalysator 2 auf eine für seinen Betrieb ausreichende Temperatur zu erwärmen, muss über das Heizelement der gesamte Abgasmassenstrom erwärmt werden, um den Katalysator 2 ebenfalls zu erwärmen. Hierfür wird eine große Energiemenge benötigt, da der gesamte Massenstrom erwärmt werden muss.

Figur 2 zeigt eine Schnittansicht durch eine erfindungsgemäße Vorrichtung 10. Sie weist ein Gehäuse 11 auf und ein darin befindliches Rohr 12, welches eine Strömungsstrecke mit einer Begrenzung in radialer Richtung ausbildet. Zwischen dem Rohr 12 und dem Gehäuse 11 ist ein Ringspalt 13 ausgebildet der vom Abgas durchströmt werden kann.

Die Durchströmungsrichtung des Gehäuses 11 und der Strömungsstrecke erfolgt von links nach rechts.

Innerhalb des Rohres 12 ist ein Heizmittel 14 zur elektrischen Beheizung des Abgases angeordnet. Weiterhin ist stromabwärts innerhalb des Rohres 12 ein Katalysator 15 angeordnet, der zur Nachbehandlung des durch ihn strömenden Abgases dient. Der Katalysator 15 ist insbesondere durch metallische oder keramische Wabenkörper gebildet, die mit einer entsprechenden Oberflächenbeschichtung beaufschlagt sind, um mittels einer chemischen Reaktion unerwünschte Bestandteile aus dem Abgas zu entfernen beziehungsweise deren Konzentration zu verringern oder mittels einer chemischen Reaktion die zugegebenen Betriebsstoffe umzuwandeln. Hierzu gehört beispielsweise die Umwandlung von wässriger Harnstofflösung in Ammoniak oder die Erzeugung von Wärme aus zugegebenem Kraftstoff.

In alternativen Ausgestaltungen können auch mehrere Katalysatoren innerhalb des Rohres angeordnet sein. Entlang des mit dem Bezugszeichen 16 versehenen Pfeils können Betriebsstoffe, wie beispielsweise eine wässrige Harnstofflösung oder Kraftstoff, in die Vorrichtung zugegeben werden.

Abgas, welches die Vorrichtung 10 durchströmt, kann direkt durch den Ringspalt 13 strömen und somit einen Bypass um die in der durch das Rohr 12 gebildete Strömungsstrecke. Alternativ kann das Abgas direkt in die Strömungsstrecke 12 einströmen und die in der Strömungsstrecke 12 angeordneten Elemente umströmen oder durchströmen. Nach dem Durchströmen der Strömungsstrecke 12 vereinen sich die beiden Strömungswege wieder und strömen in einer gemeinsamen Rohrleitung weiter.

Das Ausführungsbeispiel der Figur 2 zeigt den grundsätzlichen Aufbau einer erfindungsgemäßen Vorrichtung zur Behandlung von Abgasen. Nicht dargestellt in Figur 2 ist das Kontrollelement, welches eingesetzt wird um die Verteilung des Abgasmassenstroms auf den Ringspalt 13 und die Strömungsstrecke im Rohr 12 zu beeinflussen. Mögliche Ausführungsformen werden im Detail in den nachfolgenden Figuren beschrieben.

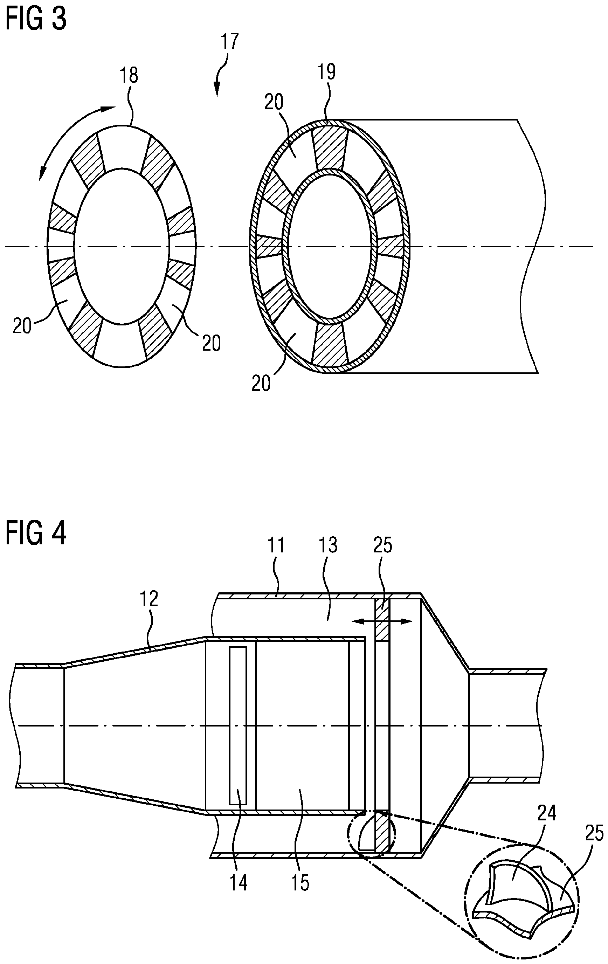

Figur 3 zeigt eine Ansicht eines Kontrollelementes 17, welches als drehbare Lochblende ausgebildet ist. Die Lochblende 17 ist dabei aus einem drehbar gelagerten Element 18 und einem feststehenden Element 19 gebildet. Die beiden Elemente 18, 19 der Lochblende 17 weisen in Umfangsrichtung zueinander beabstandete Öffnungen 20 auf. Wenn diese Öffnungen 20 durch das Verdrehen des Elementes 18 miteinander in Deckung gebracht werden, kann Abgas direkt in den dahinter liegenden Ringspalt einströmen. Sofern die Öffnungen 20 vollständig gegeneinander verdreht sind, wird der Strömungspfad in den Ringspalt hinein blockiert und das Abgas strömt vollständig durch die Strömungsstrecke im Inneren des zentralen Rohres.

Die Darstellung in Figur 3 ist explosionsartig um eine bessere Übersichtlichkeit zu gewährleisten. In einer realen Ausführung sitzen die beiden Elemente 18, 19 direkt aufeinander. Das Rohr, welches die Strömungsstrecke bildet, kann über die Lochblende 17 hinausragen oder bündig mit der Lochblende 17 abschließen. Die Lochblende 17 ist bevorzugt an der Einströmseite des Ringspalts angeordnet. Sie kann jedoch an jeder Stelle des Ringspalts angeordnet sein.

Die Figur 4 zeigt eine mögliche Ausgestaltung des Kontrollelementes als axial verschiebbare Ringblende 25. Die Ringblende 25 ist an der Ausströmseite 21 des Rohrs 12 angeordnet und derart ausgebildet, das der Ausschnitt im Zentrum der Blende 25 mit dem Innendurchmesser des Rohres 12 übereinstimmt. Durch ein Verschieben der Blende 25 nach links hin zum Rohr 12 kann eine Anlage der Blende 25 am Rohr 12 erreicht werden, wodurch der Ringspalt 13 vollständig verschlossen wird. Das durch die Vorrichtung strömende Abgas kann in diesem Fall den Ringspalt 13 nicht durchströmen und muss vollständig durch die Strömungsstrecke 12 und somit das Heizelement 14 und den Katalysator 15 strömen.

Durch das Verschieben der Ringblende 25 axial nach rechts, also weg vom Rohr 12, kann ein Strömungspfad freigegeben werden, so dass Abgas aus dem Ringspalt 13 an der Blende 25 vorbeiströmen kann und sich mit dem durch das Rohr 12 strömenden Abgas vermischen kann. Die Ringblende 25 ist im gezeigten Beispiel auf der Innenwandung des Gehäuses 11 geführt und kann axial entlang der Hauptdurchströmungsrichtung der Vorrichtung 10 verschoben werden. Durch den maximal in axialer Richtung zum Rohr 12 erreichbaren Abstand der Blende 25 kann die maximal mögliche Öffnung zwischen dem Ringspalt 13 und der Blende 25 definiert werden.

An der Ringblende 25 können drallerzeugende Elemente 24, wie beispielsweise Leitbleche, angeordnet sein um die Strömung im Ringspalt 13 turbulent zu machen und somit eine bessere Durchmischung innerhalb des Ringspaltes 13 zu erzielen. Außerdem trägt eine turbulente Strömung beim Zusammentreffen der Abgasströme nach dem Rohr 12 beziehungsweise dem Ringspalt 13 auch zu einer verbesserten Durchmischung bei. Weiterhin wird der Wärmeübergang hin zum Gehäuse 11 durch eine turbulente Randströmung vermindert, wodurch ebenfalls die Wärmeverluste reduziert werden.

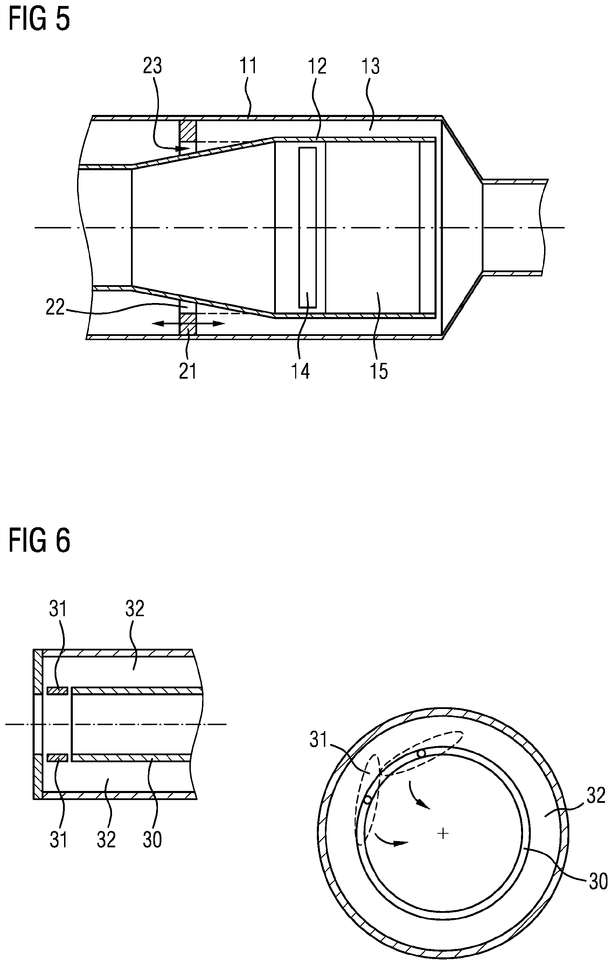

Figur 5 zeigt eine alternative Vorrichtung bei der die axial verschiebbare Ringblende 21 an einer alternativen Stelle innerhalb der Vorrichtung 10 angeordnet ist. Die Ringblende 21 ist innerhalb des Ringspalts 13 angeordnet. Die Ringblende 21 hat einen zentralen Ausschnitt 22 durch welchen das Rohr 12 geführt ist. Die Ringblende 21 ist in einem Bereich angeordnet, in welchem der Außendurchmesser des Rohres 12 sich konisch in Strömungsrichtung erweitert. Durch das Verschieben der formstabilen Ringblende 21 in axialer Richtung kann der Öffnungsspalt 23 zwischen der Ringblende 21 und dem Rohr 12 vergrößert oder verkleinert werden, wodurch der Anteil des Abgases der den Ringspalt 13 durchströmt ebenfalls vergrößert oder verkleinert werden kann.

Wenn die Ringblende 21 vollständig axial nach rechts verschoben wird, gerät die Ringblende 21 mit der Außenwandung des Rohres 12 in Anlage und der Ringspalt 13 wird vollständig verschlossen. Das Abgas strömt dann vollständig durch die Strömungsstrecke im Inneren des Rohres 12.

Sofern der Strömungspfad durch den Ringspalt vollständig verschlossen ist, wirkt der Ringspalt als thermischer Isolator zwischen dem Abgas und den Elementen innerhalb der der durch das Rohr gebildeten Strömungsstrecke und dem Gehäuse der Vorrichtung. Dadurch wird ein ungewollter Wärmeverlust nach außen vermindert.

Figur 6 zeigt eine alternative Ausgestaltung, die dadurch gekennzeichnet ist, dass der gesamte Abgasstrom vollständig in die durch das Rohr 30 gebildete Strömungsstrecke einströmt und von dort abhängig von der Stellung der gezeigten Kontrollelemente 31 in den Ringspalt 32 überströmt oder weiter durch das Rohr 30 strömt.

Die Kontrollelemente 31 sind durch drehbar gelagerte Klappen gebildet, die jeweils in axialer Richtung ausgerichtete Drehachsen aufweisen. Durch ein Verdrehen der Klappen 31 können somit Öffnungen in radialer Richtung freigegeben oder verschlossen werden, wodurch ein Überströmen zwischen dem Rohr 30 und dem Ringspalt 32 ermöglicht oder verhindert wird.

Vorteilhafterweise können mehrere Klappen 31 über den Umfang des Rohres 30 verteilt sein. Die Klappen 31 können Leitelemente aufweisen, die das durch die freigegebenen Öffnungen strömende Abgas zusätzlich ablenken, um beispielsweise eine turbulente Strömung zu erzeugen.

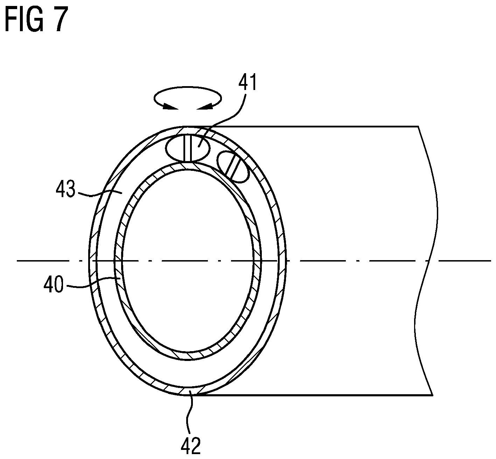

Figur 7 zeigt eine weitere alternative Ausführung wobei hier die Kontrollelemente 41 durch drehbar gelagerte Klappen 41 gebildet sind, die zwischen dem Rohr 40 und dem Gehäuse 42 angeordnet sind. Die Klappen 41 sind um in radialer Richtung verlaufende Achsen drehbar gelagert und können so Öffnungen in axialer Richtung freigeben. Die Klappen 41 sind in dem Ringspalt 43 angeordnet.

In einer vorteilhaften Ausgestaltung können mehrere Klappen 41 um den Umfang des Ringspaltes 43 verteilt angeordnet sein. Zusätzlich zu den in Figur 7 dargestellten Elementen kann ein weiteres Element im Ringspalt 43 angeordnet werden, welches die zwischen den Klappen liegenden Bereiche überdeckt, so dass keine Strömung an den Klappen vorbei durch den Ringspalt 43 entstehen kann. Ein solches Element, welches als Ring mit entsprechenden Ausschnitten ausgebildet sein kann, ist dann notwendig, wenn es erwünscht ist, dass der Ringspalt 43 vollständig verschlossen werden kann.

Die unterschiedlichen Merkmale der einzelnen Ausführungsbeispiele können auch untereinander kombiniert werden. Die Ausführungsbeispiele der Figuren 1 bis 7 weisen insbesondere keinen beschränkenden Charakter auf und dienen der Illustration der Erfindung.

## Patentansprüche

1. Vorrichtung (10) zur Nachbehandlung von Abgasen eines Verbrennungsmotors, mit einem von dem Abgas von einem Eintritt hin zu einem Austritt durchströmbaren Gehäuse (11, 42), mit einer in radialer Richtung räumlich begrenzten und in axialer Richtung durchströmbaren Strömungsstrecke (12, 30, 40), die innerhalb des Gehäuses (11, 42) angeordnet ist, mit zumindest einem in der Strömungsstrecke (12, 30, 40) angeordneten Katalysator (15) zur katalytischen Umwandlung des Abgases, wobei, zwischen der Strömungsstrecke (12, 30, 40) und der Innenwandung des Gehäuses (11, 42) ein durchströmbarer Ringspalt (13, 32, 43) ausgebildet ist, wobei die Verteilung des Abgasmassenstroms auf die Strömungsstrecke (12, 30, 40) und den Ringspalt (13, 32, 43) durch ein Kontrollelement (17, 21, 25, 31, 41) beeinflussbar ist, **dadurch gekennzeichnet, dass** zumindest ein vom Abgas durchströmbares Heizelement (14) zur elektrischen Beheizung des Abgases in der Strömungsstrecke (12, 30, 40) angeordnet ist.

2. Vorrichtung nach Anspruch 1, **dadurch gekennzeichnet, dass** das Kontrollelement (17) durch eine drehbar gelagerte Lochblende (17) gebildet ist, wobei durch Verdrehung der Lochblende (17) der durchströmbare Querschnitt des Ringspalts vergrößerbar oder verkleinerbar ist.

3. Vorrichtung nach Anspruch 2, **dadurch gekennzeichnet, dass** die Lochblende (17) einen feststehenden Abschnitt (19) und einen gegenüber diesem feststehenden Abschnitt (19) drehbar gelagerten Abschnitt (18) aufweist, wobei beide Abschnitte (18, 19) in Umfangsrichtung zueinander beabstandete Öffnungen (20) aufweisen.

4. Vorrichtung nach Anspruch 1, **dadurch gekennzeichnet, dass** das Kontrollelement durch eine in axialer Richtung des Gehäuses verschiebbare Ringblende (25, 23) gebildet ist.

5. Vorrichtung nach Anspruch 4, **dadurch gekennzeichnet, dass** die Ringblende (23) innerhalb des Ringspaltes (13) zwischen der Strömungsstrecke (12) und dem Gehäuse (11) angeordnet ist.

6. Vorrichtung nach einem der vorhergehenden Ansprüche 4 oder 5, **dadurch gekennzeichnet, dass** die Ringblende (23, 25) relativ zum Gehäuse (11) und/oder der Strömungsstrecke (12) verschiebbar ist, wobei die Ringblende (23, 25) einen definierten Öffnungsquerschnitt aufweist.

7. Vorrichtung nach einem der vorhergehenden Ansprüche 4 bis 6, **dadurch gekennzeichnet, dass** die Ringblende (25) Leitbleche (24) aufweist, wobei der durch den Ringspalt (13) strömende Abgasmassenstrom durch die Leitbleche (24) ablenkbar ist.

8. Vorrichtung nach Anspruch 1, **dadurch gekennzeichnet, dass** die die Strömungsstrecke (30) in radialer Richtung begrenzende Struktur als Kontrollelement drehbar gelagerte Klappen (31) aufweist.

9. Vorrichtung nach Anspruch 8, **dadurch gekennzeichnet, dass** die drehbar gelagerten Klappen (31) um in axialer Richtung ausgerichtete Achsen drehbar gelagert sind.

10. Vorrichtung nach einem der vorhergehenden Ansprüche 8 oder 9, **dadurch gekennzeichnet, dass** durch die Klappen (31) Öffnungen freigebbar sind, welche ein zumindest teilweises Überströmen des Abgasmassenstroms aus der Strömungsstrecke (30) in den Ringspalt (32) erlauben.

11. Vorrichtung nach einem der vorhergehenden Ansprüche 8 bis 10, **dadurch gekennzeichnet, dass** die Strömungsstrecke (30) derart im Gehäuse angeordnet ist, dass der Ringspalt (32) nur durch die von den Klappen (31) freigebbaren Öffnungen von dem Abgasstrom durchströmbar ist.

12. Vorrichtung nach Anspruch 1, **dadurch gekennzeichnet, dass** im Ringspalt (43) als Kontrollelement um radial ausgerichtete Achsen drehbar gelagerte Drallklappen (41) angeordnet sind.

13. Vorrichtung nach Anspruch 12, **dadurch gekennzeichnet, dass** durch das Verdrehen der Drallklappen (41) ein Strömungsquerschnitt des Ringspalts (43) freigebbar ist.

14. Vorrichtung nach einem der vorhergehenden Ansprüche 12 oder 13, **dadurch gekennzeichnet, dass** die Drallklappen (41) in Umfangsrichtung zueinander beabstandet im Ringspalt (43) angeordnet sind.

15. Vorrichtung nach einem der vorhergehenden Ansprüche, **dadurch gekennzeichnet, dass** die Strömungsstrecke (12, 30, 40) durch ein Mantelrohr gebildet ist, welches innerhalb des Gehäuses (11, 42) angeordnet ist.

## Claims

1. Apparatus (10) for the aftertreatment of exhaust gases of an internal combustion engine, with a housing (11, 42) through which the exhaust gas can flow from an inlet to an outlet, with a flow path (12, 30, 40) which is spatially delimited in a radial direction and through which flow can pass in an axial direction and which is arranged inside the housing (11, 42), with at least one catalytic converter (15) arranged in the flow path (12, 30, 40) for catalytic conversion of the exhaust gas, wherein an annular gap (13, 32, 43) through which flow can pass is formed between the flow path (12, 30, 40) and the inner wall of the housing (11, 42), wherein the distribution of the exhaust gas mass flow between the flow path (12, 30, 40) and the annular gap (13, 32, 43) can be influenced by means of a control element (17, 21, 25, 31, 41), **characterized in that** at least one heating element (14) through which the exhaust gas can flow and which serves for electrically heating the exhaust gas is arranged in the flow path (12, 30, 40).

2. Apparatus according to Claim 1, **characterized in that** the control element (17) is formed by a rotatably mounted perforated panel (17), wherein the through-flow cross section of the annular gap can be enlarged or reduced by rotation of the perforated panel (17).

3. Apparatus according to Claim 2, **characterized in that** the perforated panel (17) has a stationary portion (19) and a portion (18) which is mounted so as to be rotatable relative to this stationary portion (19), wherein both portions (18, 19) comprise orifices (20) spaced apart from each other in the circumferential direction.

4. Apparatus according to Claim 1, **characterized in that** the control element is formed by an annular panel (25, 23) which is movable in the axial direction of the housing.

5. Apparatus according to Claim 4, **characterized in that** the annular panel (23) is arranged inside the annular gap (13) between the flow path (12) and the housing (11).

6. Apparatus according to one of the preceding Claims 4 or 5, **characterized in that** the annular panel (23, 25) is movable relative to the housing (11) and/or the flow path (12), wherein the annular panel (23, 25) has a defined opening cross section.

7. Apparatus according to any of the preceding Claims 4 to 6, **characterized in that** the annular panel (25) has guide plates (24), wherein the exhaust gas mass flow through the annular gap (13) can be deflected by the guide plates (24).

8. Apparatus according to Claim 1, **characterized in that** the structure delimiting the flow path (30) in the radial direction has rotatably mounted flaps (31) as control elements.

9. Apparatus according to Claim 8, **characterized in that** the rotatably mounted flaps (31) are mounted so as to be rotatable about axes oriented in the axial direction.

10. Apparatus according to one of the preceding Claims 8 or 9, **characterized in that** the flaps (31) can open orifices which allow an at least partial overflow of the exhaust gas mass flow from the flow path (30) into the annular gap (32).

11. Apparatus according to any of the preceding Claims 8 to 10, **characterized in that** the flow path (30) is arranged in the housing such that the exhaust gas flow can only flow through the annular gap (32) via the orifices which can be opened by the flaps (31).

12. Apparatus according to Claim 1, **characterized in that** as control elements, swirl flaps (41) are arranged in the annular gap (43) and mounted so as to be rotatable about radially oriented axes.

13. Apparatus according to Claim 12, **characterized in that** a flow cross section of the annular gap (43) can be opened by the rotation of the swirl flaps (41) .

14. Apparatus according to one of the preceding Claims 12 or 13, **characterized in that** the swirl flaps (41) are arranged in the annular gap (43) so as to be spaced apart from each other in the circumferential direction.

15. Apparatus according to any of the preceding claims, **characterized in that** the flow path (12, 30, 40) is formed by a casing tube arranged inside the housing (11, 42).

## Revendications

1. Dispositif (10) pour le post-traitement de gaz d'échappement d'un moteur à combustion interne, comprenant un boîtier (11, 42) pouvant être traversé par le gaz d'échappement d'une entrée à une sortie, comprenant une section d'écoulement (12, 30, 40) limitée dans l'espace dans la direction radiale et pouvant être traversée dans la direction axiale, qui est agencée à l'intérieur du boîtier (11, 42), comprenant au moins un catalyseur (15) agencé dans la section d'écoulement (12, 30, 40), pour la conversion catalytique du gaz d'échappement, un espace annulaire (13, 32, 43) pouvant être traversé étant formé entre la section d'écoulement (12, 30, 40) et la paroi intérieure du boîtier (11, 42), la répartition du flux massique de gaz d'échappement sur la section d'écoulement (12, 30, 40) et l'espace annulaire (13, 32, 43) pouvant être influencée par un élément de contrôle (17, 21, 25, 31, 41), **caractérisé en ce qu'**au moins un élément chauffant (14) pouvant être traversé par le gaz d'échappement est agencé dans la section d'écoulement (12, 30, 40) pour le chauffage électrique du gaz d'échappement.

2. Dispositif selon la revendication 1, **caractérisé en ce que** l'élément de contrôle (17) est formé par un diaphragme perforé (17) monté de manière rotative, la rotation du diaphragme perforé (17) permettant d'agrandir ou de réduire la section transversale de l'espace annulaire pouvant être traversée.

3. Dispositif selon la revendication 2, **caractérisé en ce que** le diaphragme perforé (17) présente une partie fixe (19) et une partie (18) montée de manière rotative par rapport à cette partie fixe (19), les deux parties (18, 19) présentant des ouvertures (20) espacées les unes des autres dans la direction circonférentielle.

4. Dispositif selon la revendication 1, **caractérisé en ce que** l'élément de contrôle est formé par un diaphragme annulaire (25, 23) déplaçable dans la direction axiale du boîtier.

5. Dispositif selon la revendication 4, **caractérisé en ce que** le diaphragme annulaire (23) est agencé à l'intérieur de l'espace annulaire (13) entre la section d'écoulement (12) et le boîtier (11).

6. Dispositif selon l'une quelconque des revendications 4 ou 5 précédentes, **caractérisé en ce que** le diaphragme annulaire (23, 25) peut être déplacé par rapport au boîtier (11) et/ou à la section d'écoulement (12), le diaphragme annulaire (23, 25) présentant une section transversale d'ouverture définie.

7. Dispositif selon l'une quelconque des revendications 4 à 6 précédentes, **caractérisé en ce que** le diaphragme annulaire (25) présente des tôles de guidage (24), le flux massique de gaz d'échappement traversant l'espace annulaire (13) pouvant être dévié par les tôles de guidage (24).

8. Dispositif selon la revendication 1, **caractérisé en ce que** la structure délimitant la section d'écoulement (30) dans la direction radiale présente des clapets (31) montés de manière rotative en tant qu'élément de contrôle.

9. Dispositif selon la revendication 8, **caractérisé en ce que** les clapets (31) montés de manière rotative sont montés de manière rotative autour d'axes orientés dans la direction axiale.

10. Dispositif selon l'une quelconque des revendications 8 ou 9 précédentes, **caractérisé en ce que** les clapets (31) permettent de libérer des ouvertures qui autorisent un passage au moins partiel du flux massique de gaz d'échappement de la section d'écoulement (30) dans l'espace annulaire (32).

11. Dispositif selon l'une quelconque des revendications 8 à 10 précédentes, **caractérisé en ce que** la section d'écoulement (30) est agencée dans le boîtier de telle sorte que l'espace annulaire (32) ne peut être traversé par le flux de gaz d'échappement que par les ouvertures pouvant être libérées par les clapets (31).

12. Dispositif selon la revendication 1, **caractérisé en ce que** des clapets à turbulence (41) montés de manière rotative autour d'axes orientés radialement sont agencés dans l'espace annulaire (43) en tant qu'élément de contrôle.

13. Dispositif selon la revendication 12, **caractérisé en ce que** la rotation des clapets à turbulence (41) permet de libérer une section transversale d'écoulement de l'espace annulaire (43).

14. Dispositif selon l'une quelconque des revendications 12 ou 13 précédentes, **caractérisé en ce que** les clapets à turbulence (41) sont agencés espacés les uns des autres dans la direction circonférentielle dans la fente annulaire (43).

15. Dispositif selon l'une quelconque des revendications précédentes, **caractérisé en ce que** la section d'écoulement (12, 30, 40) est formée par un tube d'enveloppe qui est agencé à l'intérieur du boîtier (11, 42).
